**Europäisches Patentamt**

**European Patent Office**

**Office européen des brevets**

(19)

(11) Veröffentlichungsnummer : **0 103 235**
**B1**

(12)

# EUROPÄISCHE PATENTSCHRIFT

(45) Veröffentlichungstag der Patentschrift :
**30.12.86**

(51) Int. Cl.⁴ : **B 23 B 51/02**

(21) Anmeldenummer : **83108581.6**

(22) Anmeldetag : **31.08.83**

(54) **Mehrlippenbohrer.**

(30) Priorität : **14.09.82 DE 3233968**

(43) Veröffentlichungstag der Anmeldung :
**21.03.84 Patentblatt 84/12**

(45) Bekanntmachung des Hinweises auf die Patenterteilung : **30.12.86 Patentblatt 86/52**

(84) Benannte Vertragsstaaten :
**AT CH DE FR GB IT LI**

(56) Entgegenhaltungen :
**FR-A-   873 752**
**US-A-   693 508**
**WILA-VERLAG FÜR WIRTSCHAFTSWERBUNG, Heft 29, 21. Juli 1977 WILHELM LAMPL, München Seite 1195**

(73) Patentinhaber : **HARTMETALLWERKZEUGFABRIK ANDREAS MAIER GMBH + CO KG**
**Stegwiesen 2**
**D-7959 Schwendi-Hörenhausen (DE)**

(72) Erfinder : **Maier, Andreas**
**Stegwiesen 2**
**D-7959 Schwendi-Hörenhausen (DE)**

(74) Vertreter : **Braito, Herbert, Dipl.-Ing.**
**Postfach 1140 Martin-Luther-Strasse 1**
**D-7950 Biberach/Riss 1 (DE)**

## Beschreibung

Die Erfindung betrifft einen Mehrlippenbohrer mit wenigstens drei Schneidlippen und vorwiegend radial verlaufenden Stirnschneiden, die jeweils durch einen axial vorragenden Kulminationspunkt unterteilt sind in eine positiv zur Bohrerachse geneigte Außenschneide und eine negativ zur Bohrerachse geneigte Innenschneide, von welchen mindestens eine bis an die Bohrerachse bzw. über diese hinausgeführt ist, wobei die von den Kulminationspunkten ausgehenden Außenschneiden wenigstens bis zu einem größeren Abstand von ihren Kulminationspunkten auf einer gemeinsamen Umlauffläche liegen.

Ein Bohrer dieser Art ist bekannt durch das DE-Gebrauchsmuster 77 10 873. Dabei haben alle Kulminationspunkte denselben radialen Abstand von der Bohrerachse und sind in axialer Richtung auf gleicher Höhe angeordnet. Zudem sind Innenund Außenschneiden völlig identisch angeordnet, so daß alle Schneiden die gleiche Nut in das Werkstück einformen und die Spanstärke an jeder Stelle der einzelnen Schneiden gleich groß ist.

Die Führung des Bohrers soll dort zunächst durch einen zentrisch zur Bohrerachse gebildeten Innenkegel bewirkt werden, und zur zusätzlichen Führung und Zentrierung dienen in die Außenschneiden eingeformte wiederum identisch ausgebildete Aussparungen, die hierzu mit achsparallelen Innenkanten versehen sind und auch als Spanteiler wirken.

Bohrer dieser Art sind verhältnismäßig kompliziert, da durch jede Aussparung in den Außenschneiden die Ränder dieser Aussparungen als zusätzliche Schneiden zu schleifen sind. Zudem kann die durch diese Aussparungen gebildete zusätzliche Führung erst geraume Zeit nach Schnittansatz wirksam werden, da die vordersten Kanten der Aussparung weit hinter die Kulminationspunkte der Hauptschneiden zurückversetzt sind. Ein Taumeln des Bohrers beim Ansatz am Werkstück läßt sich so nicht verhindern.

Zudem hat sich gezeigt, daß zwar eine gleichmäßige Span- und damit Kraftverteilung an den Außenschneiden wünschenswert ist, um eine optimale Spanleistung bei etwa gleichmäßiger Belastung der Hauptschneiden zu erzielen, daß dies aber im Bereich der Innenschneiden keine sonderliche Bedeutung mehr hat. Im Innenbereich wird sogar bei der dort herrschenden geringen Umlaufgeschwindigkeit mit identischer Anordnung der Innenschneiden keine optimale Richtkraft der einzelnen Schneidelemente und eine nur mäßige Zentrierführung erzielt, während die Spanableitung der sich ·dabei meist einstellenden Rollspäne oft behindert wird.

Die Erfindung geht aus von dem eingangs definierten Mehrlippenbohrer und verfolgt die Aufgabe, diesen Bohrer so weiterzubilden, daß bei einfacher Schneidenausbildung und guten Zentriereigenschaften die Spanbildung und Spanableitung verbessert werden.

Diese Aufgabe wird erfindungsgemäß dadurch gelöst,

a) daß die Kulminationspunkte unterschiedlichen Radialabstand von der Bohrerachse haben und axial unterschiedlich weit vorragen und

b) daß die Innenschneiden mit unterschiedlichem Winkel zur Bohrerachse geneigt sind und

c) ihre Umlaufflächen einander in ihrem mittleren Bereich durchdringen.

Vergleichsversuche haben gezeigt, daß bei den üblichen Einfahrgeschwindigkeiten des Bohrers ins Werkstück meist eine einzige innen vorgesehene zentrische Führung ausreicht, die anfängliche Zentrierung und Ausrichtung der Bohrerspitze bei geringen Ablenkkräften sicherzustellen. Da erfindungsgemäß die Kulminationspunkte bzw. Schneidenspitzen der beiden anderen Stirnschneiden aufeinanderfolgend zum Eingriff kommen, werden schnell die Abstützung und die Zentrierung verbessert und die Laufruhe gesteigert, bis schließlich die Stirnschneiden vollständig und gegebenenfalls auch die Nebenschneiden zum Eingriff kommen und damit die volle Spanleistung erzielt wird. Wegen der sich ändernden Umlaufgeschwindigkeit nimmt die örtliche Zerspanungsleistung von außen zur Bohrerachse ständig ab. Da die Schneidleistung dicht an der Bohrerachse ohne sonderliche Beanspruchung von einer einzigen Schneide bewerkstelligt werden kann, sind die von den Innenschneiden ausgehenden, quer zur Achse wirkenden Ablenkkräfte klein. Bei kurzen Werkzeugen, vor allem aus Vollhartmetall, bleibt auch die Stabilität des Grundkörpers weitgehend unbeeinflußt von solchen Querkräften, die aus einer ungleichen Schneidenausbildung herrühren. Zwar sind bei der unterschiedlichen Länge und Neigung der Innenschneiden auch die von diesen herrührenden Querkräfte unterschiedlich, aber die einzelnen Schneiden lassen sich so kombinieren, daß selbst bei ungleicher Schneidenzahl ein nahezu exakter Ausgleich erreicht wird. Daher können auch den einzelnen Stirnschneiden durch Relativanordnung und -neigung zur Bohrerachse recht unterschiedliche Aufgaben zugewiesen werden.

Da sich die z. B. drei Innenschneiden in ihrem mittleren Bereich durchdringen, erzeugen sie recht unterschiedliche Späne, die sich jeweils nur über einen vorgegebenen Durchmesserbereich erstrecken. Von den drei so erzeugten Spänen hat dann wenigstens einer seine größte Dicke im Bereich seines Kulminationspunktes und wenigstens einer seine Größte Dicke im Bereich der Bohrerachse, jeweils bei dreieckförmigem Querschnitt. Die Späne erhalten also im Bereich ihrer grösseren Dicke einen größeren, im Bereich ihrer kleineren Dicke einen entsprechend kleineren Verformungswiderstand.

Dadurch werden sie ungleichförmig, vor allem aber wesentlich früher gebrochen als Späne annähernd gleichmäßiger Dicke. Es werden also verkürzte Einzelspäne gebildet, die sich wesentlich leichter aus dem Innenbereich der Bohrung heraustransportieren lassen als Rollspäne bzw. ungebrochene gleichförmig ablaufende Späne. Erfindungsgemäß wird somit der Spantransport, begünstigt durch die verbesserte Anfangszentrierung und die dadurch gesteigerte Laufruhe, erheblich verbessert ; gleichzeitig werden die Reibung und die Antriebsverluste vermindert.

Durch die FR-A-873 752 ist ein Zweilippenbohrer bekannt, dessen Stirnschneiden jeweils durch einen Kulminationspunkt in Außenschneide und Innenschneide unterteilt sind. Auch dabei liegen die Außenschneiden auf einer gemeinsamen Umlauffläche, während die Innenschneiden unterschiedlich zueinander geneigt sind, so daß die Kulminationspunkte axial unterschiedlich weit vorragen und größer unterschiedlichen Radialabstand von der Bohrerachse haben. Die dadurch hervorgerufenen Momentunterschiede sind durch eine Unterbrechung einer Außenschneide annähernd ausgeglichen. Da jedoch beide Innenschneiden bis dicht zur Bohrerachse geführt sind, werden innen ebenso wie außen Rollspäne gleicher Dicke erzielt, was zu den vorerwähnten Schwierigkeiten beim Abtransport der Späne führt.

Erfindungsgemäß wird zudem bevorzugt, die Umlaufkreise der Kulminationspunkte der Stirnschneiden radial dicht beieinander liegen zu lassen. Auf diese Weise bleiben die von den einzelnen Kulminationspunkten herrührenden maximalen Kraftund Momentunterschiede nur sehr kurze Augenblicke wirksam. Durch den kurz aufeinanderfolgenden Eingriff der beiden anderen Schneiden wird zudem sehr schnell eine verbesserte Zentrierung erreicht.

Nach einer Ausführungsform der Erfindung wird die vom inneren Kulminationspunkt hergeführte Innenschneide schwächer und die vom äußeren Kulminationspunkt hergeführte Innenschneide stärker zur Bohrerachse geneigt als die anderen Innenschneiden. Da der innere Kulminationspunkt bei Anordnung auf der gleichen Umlauffläche am weitesten axial vorragt, bildet er mit seiner Innenschneide die Zentrierschneide, wobei der Zentriereffekt durch die geringe Neigung der zugehörigen Innenschneide zur Bohrerachse begünstigt wird. Bei den anderen Innenschneiden, insbesondere bei derjenigen, die über die Bohrermitte schneiden soll bzw. über diese hinausgeführt ist, bleibt dagegen eine stärkere Neigung angebracht.

Wenigstens die äußeren Schneidenecken der Innenschneiden, wo die größere Beanspruchung auftritt, sollten normalerweise in der gleichen Radialebene zur Bohrerachse liegen, um dort die Spanleistung einigermaßen gleichmäßig zu verteilen. Wenigstens eine dieser äußeren Schneidecken, in der Regel alle, können jedoch abgefast oder angerundet sein, um die örtliche Beanspruchung weiter herabzusetzen und/oder Drehmomentunterschiede auszugleichen.

Vor allem bei mehr als drei Schneidlippen empfiehlt es sich, zum Schneiden des Zentrierkreises wenigstens zwei einander etwa gegenüberliegend angeordnete Stirnschneiden mit etwa gleichweit über den anderen Teil der Stirnschneiden vorragenden Kulminationspunkten zu versehen.

Die Kulminationspunkte können einen Abstand im Bereich von 0,15r bis 0,8r, insbesondere 0,20r bis 0,35r, von der Bohrerachse haben. Dabei können die Außenschneiden mit der Bohrerachse einen Winkel von 45° bis 85°, insbesondere 58° bis 65° bilden, während der Winkel der Innenschneide mit der Bohrerachse zwischen 25° und 82°, insbesondere 55° bis 78° liegen sollte. Die Hauptschneiden lassen sich nach Bedarf dreieckförmig, trapezförmig oder, insbesondere nach einem Kegelschnitt, gerundet ausbilden. Die beste Zentrierung wird nach derzeitiger Auffassung jedoch bei der dreieckförmigen Ausführung, also mit einer Schneidenspitze als Kulminationspunkt, erzielt.

Die einzelnen Daten, insbesondere die verschiedenartige Winkel, können nicht pauschal im voraus festgelegt werden, sondern sind nach dem jeweiligen Bedarfsfall gesondert herauszuarbeiten.

Die Zeichnung gibt die Erfindung beispielsweise wieder. Es zeigen

Figur 1 eine Seitenansicht eines erfindungsgemäßen Dreilippen-Spiralbohrers mit verstärktem Schaft,

Figur 2 eine vergrößerte Ansicht auf die Stirnschneiden dieses Bohrers von oben in Fig. 1 gesehen,

Figur 3 die übereinander in einer gemeinsamen Axialebene gezeichneten Stirnschneiden der drei Schneidlippen,

Figur 4 eine der Fig. 1 entsprechende Seitenansicht eines Spiralbohrers mit Kühlbohrungen,

Figur 5 eine Stirnansicht dieses Bohrers,

Figur 6 eine der Fig. 3 entsprechende Darstellung mit etwas anders gestalteten Innenschneiden und

Figur 7 ein Fig. 3 entsprechendes Schaubild für einen Vierlippenbohrer.

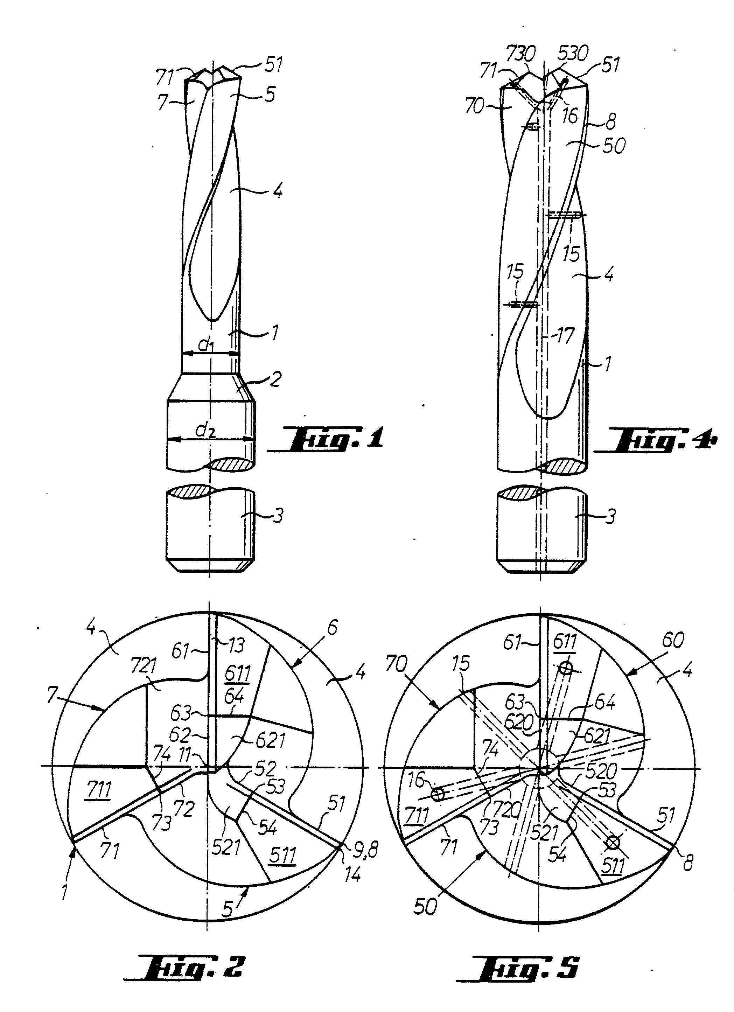

Nach Fig. 1 sitzt der zylindrische Schneidschaft 1 über ein Kegelstück 2 auf dem zylindrischen Einspannschaft 3. Durch drei Spannuten 4 sind Schneidlippen 5, 6, 7 mit drei unter weitergehend gleicher Umfangsteilung vorgesehenen Stirnschneiden gebildet, die jeweils eine Außenschneide 51, 61, 71 und eine Innenschneide 52, 62, 72 aufweisen und zwischen Innen- und Außenschneide einen Kulminationspunkt 53, 63, 73 bilden.

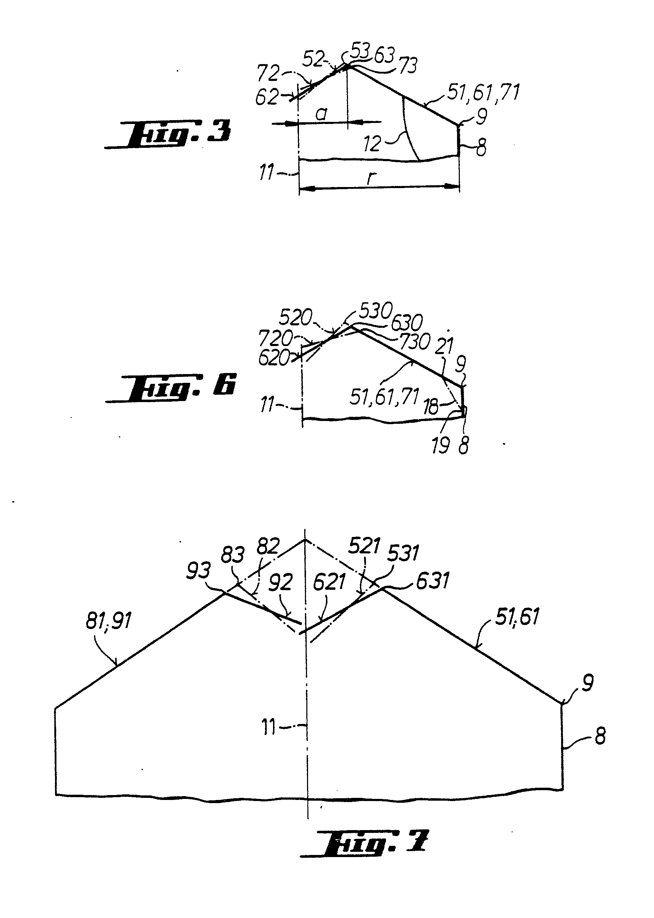

Wie vor allem die Übereinanderprojektion der drei Hauptschneiden in eine Ebene gemäß Fig. 3 erkennen läßt, sind sämtliche Außen- und Innenschneiden geradlinig ausgeführt und schneiden sich im Kulminationspunkt in einer Spitze. Die Dreieck-Form wird schon aus herstellungstechnischen Gründen bevorzugt. Es kann jedoch auch eine Trapezform oder eine Kurvenform gewählt werden, entweder eine durchgehend gewölbte Kurve oder gesonderte Wölbungskurven für Innen- und Außenschneide. Vor allem durch die Trapezform wird die Beanspruchung am jeweiligen Kulminationspunkt herabgesetzt. Eine solche Ausführung kann ebenso wie eine Rundung auch im Bereich aller anderen höchstbeanspruchten Schneidenteile zum Einsatz kommen.

Die Außenschneiden 51, 61, 71 die unter 60-65° zur Bohrerachse 11 stehen, sind ebenso wie die Nebenschneiden 8 und die Schneidenecken 9 zur Deckung gebracht, liegen also auf der gleichen Rotationsfläche um die Bohrerachse 11. In diesem Bereich wird daher die Spanleistung gleichmäßig auf alle drei Schneiden verteilt. Die Höchstbeanspruchung an den Schneidenecken 9 kann zudem noch dadurch herabgemindert werden, daß man in diesem Bereich in bekannter Weise einen Schneidkörper 12 höherer Schneidleistung einsetzt, sofern nicht der ganze, alle Hauptschneiden umfassende Kopf des Bohrers aus höherwertigem Schneidstoff besteht. Bei Werkzeugstahl lassen sich so Schneidkörper aus Hartmetall, Schneidkeramik u. dgl., bei einem Werkzeugkörper aus Hartmetall Schneidstoffe aus PKD (Polykristalliner Diamant) oder CBN (cubisches Bornitrid) einsetzen.

Die drei Kulminationspunkte 53, 63, 73 liegen dicht beieinander auf der gemeinsamen Umlauffläche der Außenschneiden und haben etwa einen mittleren Abstand a=0,3r von der Bohrerachse 11. Der Kulminationspunkt 53 liegt der Bohrerachse am nächsten und ragt damit auch axial am weitesten nach vorn. Die Stirnschneide 51, 52 der Schneidlippe 5 bildet damit die Zentrierschneide, die einen Zentrierkreis mit relativ geringem Durchmesser schneidet und damit den kleinsten Auslenkkräften unterliegt.

Die Innenschneide 52 ist am schwächsten, ca. 55-60° gegenüber der Bohrerachse 11 geneigt, die vom äußeren Kulminationspunkt 73 ausgehende Innenschneide 72 am stärksten, etwa um 65-70°. Alle Umlaufkreise der drei Innenschneiden durchdringen sich im mittleren Bereich zwischen Bohrerachse und den Kulminationspunkten. Während die vom mittleren Kulminationspunkt 63 ausgehende Innenschneide 62 etwas über die Bohrerachse 11 hinausgeführt ist, also « über die Mitte schneidet » enden die Innenschneiden 52 und 72 mit geringem Abstand von der Bohrerachse.

An alle Schneiden, auch an die Nebenschneide 8, ist eine Fase 13 bzw. 14 mit einer Breite in der Größenordnung 0,1-1 mm je nach Schneiddurchmesser d1 angeschliffen. Der Durchmesser des Einspannschaftes 3 ist mit d2 bezeichnet. Der Freiwinkel im Bereich dieser Fase liegt in der Größenordnung von 2° bis 3°, bei einem Keilwinkel im Fasenbereich von etwa 75° bis 88°.

Rückseitig an die Fasen 13 schließen sich für alle Außen- und Innenschneiden gesonderte Rückenflächen 511, 521, 611, 621, 711, 721 an. Die Rückenflächen aller Außenschneiden sind von denen der zugehörigen Innenschneide durch eine Dachkante 54, 64 bzw. 74 getrennt. Dadurch wird bewirkt, daß von jeder einzelnen Teilschneide ein gesonderter Span abgelöst wird, durch die drei Schneidlippen also sechs Einzelspäne. Besondere Bedeutung kommt hier der Ausbildung der in der Regel gekrümmten inneren Rückenflächen 521, 621, 721 zu, damit sich im Bereich der Bohrerachse kein Stau ausbilden kann. Je nach Verwendungszweck kann man hier Fließspäne ableiten oder durch in bekannter Weise eingeformte Spanbrecher Kurzspäne erzeugen.

Bezogen auf die Rückenflächen kann der Keilwinkel verhältnismäßig klein gewählt werden, etwa von 50° bis 68°. Auf diese Weise werden außergewöhnliche Schneidleistungen bei geringem Kraftaufwand erzielt, und es wird die gesamte Beanspruchung des Bohrers, insbesondere an den höchstbeanspruchten Stellen herabgesetzt, was zu verringerter Erwärmung und damit vergrößerter Standzeit führt. Durch den unmittelbar zuvor, insbesondere im Kulminationspunkt 53, durchgeführten Zentriervorgang läßt sich eine erhebliche Positionsgenauigkeit erreichen. Dadurch wird die Gefahr eines Bohrerverlaufs vermindert und der Rundheitsgrad der Bohrung ebenso verbessert. Durch die Mehrlippenanordnung wird die Oberflächengüte der Bohrung zufolge gesteigerter und vergleichmäßigter Wärmeabfuhr verbessert. Der Bohrungsrand wird weniger verschmiert, auch wenn Werkstoff mit eingelagerten Hartkörpern wie bei glasfaserdurchsetzten Leiterplatten, bearbeitet werden muß.

Da der erste Angriffspunkt an drei höchst schneidaktiven Kulminationspunkten 53, 63, 73 erfolgt, wird der Schneidwiderstand insgesamt, vor allem aber beim Anbohren verringert. Bei hinreichender Drehzahl kann man mit wesentlich größerer Geschwindigkeit das Werkstück anfahren, und dies ist vor allem für Arbeitsgänge beim Bohren dünnwandiger Werkstücke von Bedeutung.

In den Fig. 5 und 6 sind gleiche und gleichartige Teile mit denselben Bezugszeichen bezeichnet wie in den Fig. 1 und 3. Es sollen daher zunächst die Abweichungen geschildert werden. So haben dort Schneidschaft 1 und Einspannschaft 3 gleichen Durchmesser, wenn auch der Schneidschaft, jedenfalls in seinem rückwärtigen Teil, meist etwas dünner geschliffen ist. Auch die Aufteilung in Innenschneiden und Außenschneiden ist im wesentlichen gleich. Zwar sind beide Bohrer gegenüber den üblicherweise zum Bohren von Leiterplatten eingesetzten Kleinbohrern mehrfach vergrößert dargestellt, aber die Vollschaftausführung nach Fig. 4 kommt vornehmlich für etwas größere Bohrerdurchmesser in Betracht.

Hinsichtlich der Schneidengestaltung ist abweichend im Prinzip nur die größere Änderung der Neigung der Innenschneiden 520, 620, 720 zur Bohrerachse 11. So liegt der Neigungswinkel der Innenschneide 520 etwa bei 45°, der der mittleren, über die Mitte schneidenden Innenschneide 620 in der Größenordnung von 60° und der Neigungswinkel der Innenschneide 720 bei 75°. Es liegen auch die Kulminationspunkte 530, 630 und 730 geringfügig weiter auseinander.

Bedeutung hat bei dieser Abweichung vor allem die stärkere Neigung der Innenschneide 520, da auf diese Weise größere Zentrierkräfte aufgebracht werden können. Diese stärkere Neigung ist nicht typisch für Bohrer mit größeren Durchmessern, sondern kann im Prinzip je nach Anwendungszweck auch bei sehr kleinen Bohrern vorteilhaft zur Anwendung gebracht werden. Im Kulminationspunkt 530, der hier auch etwas weiter über die Umlaufkreise der anderen Schneiden vorragt, ergibt sich dadurch zwar eine etwas größere Leistungsaufnahme, aber die dort entstehende Wärme kann schneller in den Bohrerkörper abgeleitet werden, da die Belastung nach innen sehr schnell abnimmt.

Zudem ist die Wärmebelastung hier durch ein System von Kühlbohrungen herabgesetzt, das die Zuführung einer Kühlflüssigkeit bis dicht an die hochbelasteten Schneidenteile ermöglicht.

Dabei ist eine Sackbohrung 17 vom Einspannende des Bohrers her zentrisch zur Bohrerachse 11 bis dicht zum Schneidenkopf geführt. Aus dieser Sackbohrung führen zunächst sternförmige Zweigbohrungen 15 in die Spannuten 4 und vom Ende der Bohrung ausgehende weitere Bohrungen 16 in jede einzelne Schneidlippe 50, 60, 70 bis in den mittleren Teil der Rückenflächen 511, 611 und 711. Auf diese Weise werden vor allem die noch verhältnismäßig hochbelasteten Außenschneiden bis in die Schneidecken 9 und die Kulminationspunkte gekühlt.

Durch Kühlung des Spangutes und direkt der geschnittenen Werkstückoberfläche durch das austretende Kühlmittel wird die gesamte Umgebungstemperatur herabgesetzt und damit die Erhitzung gemindert. Zudem wird man dort zur Verbesserung des Spanflusses ein schmierendes Kühlmittel, insbesondere Kühlöl, verwenden. Dadurch wird auch wiederum die Reibung zwischen Bohrer und Werkstück herabgesetzt und Oberflächengüte und Laufruhe ebenso weiter verbessert wie dadurch die Positionsgenauigkeit. Die beispielsweise in den Fig. 4 und 5 dargestellten Kühlbohrungen können auch auf andere Weise geführt werden, beispielsweise können die Bohrungen an der Bohrerbrust dicht bei den Hauptschneiden nach außen geöffnet sein. Man kann so jeder Hauptschneide auch mehrere Kühlleitungs-Austritte derart zuordnen, daß vor allem die Schneidecken einer besonders intensiven Kühlung unterworfen werden. So kann aus der vorauseilenden Schneidlippe Kühlmittel unmittelbar auf die nachfolgende Hauptschneide, und zwar wiederum möglichst exakt auf die hochbeanspruchten Schneidecken aufgespült werden.

Die beiden Ausführungsbeispiele können in mancherlei Weise abgewandelt werden, hinsichtlich Schneidenzahl, -anordnung und -ausbildung, insbesondere in Bezug auf die Innenschneiden. So müssen die Kulminationspunkte nicht unbedingt so dicht zusammenliegen wie in den Fig. 3 und 6 dargestellt.

Eine oder ggf. mehrere Aussenschneiden können auch mit grösserem Abstand vom innersten Kulminationspunkt von der gemeinsamen Umlauffläche abweichen, und die tatsächlich den Zentrierkreis herstellende Schneide kann noch spitzer, insbesondere auch im Bereich der Außenschneide steiler abfallend ausgebildet sein als in Fig. 6 dargestellt. Es müssen sich vor allem die Umlaufflächen der Innenschneiden nicht in einem gemeinsamen Kreis schneiden. Im Prinzip reicht es aus, wenn die vom innersten Kulminationspunkt 53 zurückgeführte Innenschneide 52 die von der Innenschneide 62 gebildeten Rotationskurve schneidet, da weiter innen die Umlaufgeschwindigkeit und damit die Bohrleistung so gering sind, daß diese in der Regel von einer einzigen Schneide bewerkstelligt werden kann.

Der Abstand a der Zentrierkreisschneide von der Bohrerachse wird zwar derzeit mit 0.3r bevorzugt, er kann durchaus grösser sein, etwa bis zu 0,65r und kleiner bis unter 0,15r. Das optimale Verhältnis hängt von verschiedenartigen Faktoren wie Material und Bohrerdurchmesser ab, die im voraus nicht exakt bestimmt werden können und durch Versuche ermittelt werden müssen. Dies gilt auch für die genaue Bemessung der Freiwinkel, Keilwinkel und Schneidenneigungen zur Bohrerachse, ebenso wie die anderen hier nicht weiter erwähnten Spanführungsflächen auf der Rückenseite der Schneidlippen.

Vor allem bei mehr als drei Stirnschneiden kann man auch (s. Fig. 7) den Zentrierkreis durch zwei identisch ausgebildete und — etwa diametral — zur Bohrerachse angeordnete Schneiden-Kulminationspunkte herstellen lassen. Auf diese Weise verteilen sich die auch bei kleinem Umlaufradius an den vorstehenden Schneidenecken auftretenden Belastungen. Zudem werden weitgehend die Ablenkkräfte kompensiert, die sonst durch einseitigen Angriff der Zentrierschneide entstehen können. Dabei könnten die Kulminationspunkte u.U. auch weiter nach außen gerückt sein.

Fig. 7 zeigt in einer den Fig. 3 und 6 entsprechenden Darstellung ein Schaubild für die paarweise übereinander projizierten Stirnschneiden eines Vierlippenbohrers, wobei die ersten beiden Stirnschneiden mit den Außenschneiden 51, 61, den Innenschneiden 521 und 621 und den Kulminationspunkten 531 und 631 den ersten beiden Schneiden der Ausführung gemäß Fig. 1 bis 3 entsprechen, jedoch einen Teilungswinkel von 90° zueinander bilden. Der ersten Stirnschneide liegt die dritte Stirnschneide mit der Außenschneide 81, der Innenschneide 82 und dem Kulminationspunkt 83 diametral gegenüber. Beide Schneiden sind identisch ausgebildet, und die Kulminationspunkte 531 und 83 liegen in der gleichen Radialebene zur Bohrerachse 11.

Auch die beiden restlichen Schneiden liegen einander diametral gegenüber, aber der zwischen Außenschneide 91 und Innenschneide 92 gebildete Kulminationspunkt 93 ist gegenüber dem Kulminationspunkt 631 etwas zurückversetzt. Ebenso ist zum Unterschied von den beiden ersterwähnten Innenschneiden die Innenschneide 92 stärker zur Bohrerachse 11 geneigt als die Innenschneide 621.

Auf diese Weise bilden beide Kulminationspunkte 83 und 531 mit ihren Innenschneiden 82 und 521 völlig identisch belastete Zentrierschneiden. Es sind auch die Neigungen der Innenschneiden 92 und 621 unter Berücksichtigung ihrer axialen Lage so aufeinander abgestimmt, daß die von diesen Schneiden aufgenommenen Drehmomente einander weitgehend ausgleichen und auch die Radialkräfte sich annähernd kompensieren. Dieser Ausgleich ist bei dem Vierlippenbohrer einfacher als bei den bisher erwähnten Dreilippenbohrern.

Wie in Fig. 6 gezeigt, kann die Schneidecke 9 aufgelöst werden durch eine Rundung oder eine Anschlifffläche 18 zur Bildung von zwei Schneidecken 19, 21 mit geringerem Eckenwinkel.

Dieser Eckenwinkel kann beispielsweise zwischen der Anschlifffläche 18 und der Nebenschneide 8 eine Größe von 3° bis 45° haben.

Der Bohrer kann in bekannter Weise gerade genutet, also mit sich parallel zur Bohrerachse 11 erstreckenden Spannuten ausgebildet oder spiralgenutet sein, wobei der Spiralwinkel eine Größe von 0° bis 45° haben kann.

### Patentansprüche

1. Mehrlippenbohrer mit wenigstens drei Schneidlippen (5, 6, 7) und vorwiegend radial verlaufenden Stirnschneiden, die jeweils durch einen axial vorragenden Kulminationspunkt (53, 63, 73) unterteilt sind in eine positiv zur Bohrerachse (11) geneigte Aussenschneide (51, 61, 71) und eine negativ zur Bohrerachse (11) geneigte Innenschneide (52, 62, 72), von welchen mindestens eine bis an die Bohrerachse (11) bzw. über diese hinausgeführt ist, wobei die von den Kulminationspunkten (53, 63, 73) ausgehenden Außenschneiden (51, 61, 71) wenigstens bis zu einem größeren Abstand von ihren Kulminationspunkten auf einer gemeinsamen Umlauffläche liegen, dadurch gekennzeichnet,

a) daß die Kulminationspunkte (53, 63, 73) unterschiedlichen Radialabstand von der Bohrerachse (11) haben und axial unterschiedlich weit vorragen und

b) daß die Innenschneiden (52, 62, 72) mit unterschiedlichem Winkel zur Bohrerachse (11) geneigt sind und

c) ihre Umlaufflächen einander in ihrem mittleren Bereich durchdringen.

2. Mehrlippenbohrer nach Anspruch 1, dadurch gekennzeichnet, daß die Umlaufkreise der Kulminationspunkte (53, 63, 73) der Stirnschneiden radial dicht beieinanderliegen.

3. Mehrlippenbohrer nach Anspruch 1 oder 2, dadurch gekennzeichnet, daß die vom inneren Kulminationspunkt (53) hergeführte Innenschneide (52) schwächer und die vom äußeren Kulminationspunkt (73) hergeführte Innenschneide (72) stärker zur Bohrerachse (11) geneigt ist als die andere bzw. anderen Innenschneiden (62).

4. Mehrlippenbohrer nach Anspruch 1, dadurch gekennzeichnet, daß die äußeren Schneidenecken (9) zwischen Außenschneiden (51, 61, 71) und Nebenschneiden (8) in der gleichen Radialebene zur Bohrerachse (11) liegen.

5. Mehrlippenbohrer nach einem der Ansprüche 1 bis 4, dadurch gekennzeichnet, daß wenigstens eine äußere Schneidenecke zwischen Außenschneiden (51, 61, 71) und Nebenschneiden (8) abgefast oder abgerundet ist.

6. Mehrlippenbohrer nach einem der Ansprüche 1 bis 5 mit mehr als drei Bohrlippen, dadurch gekennzeichnet, daß wenigstens zwei einander etwa gegenüberliegend angeordnete Stirnschneiden mit etwa gleich weit über den anderen Teil der Stirnschneiden vorragenden Kulminationspunkten (83, 531) versehen sind.

7. Mehrlippenbohrer nach einem der Ansprüche 1 bis 6, dadurch gekennzeichnet, daß die Kulminationspunkte (53, 63, 73) einen Abstand 0,15r bis 0,8r, insbesondere 0,2-0,3r, von der Bohrerachse (11) haben.

8. Mehrlippenbohrer nach einem der Ansprüche 1 bis 7, dadurch gekennzeichnet, daß die Außenschneiden (51, 61, 71) mit der Bohrerachse (11) Winkel von 45° bis 85°, insbesondere 58° bis 65° bilden.

9. Mehrlippenbohrer nach einem der Ansprüche 1 bis 8, dadurch gekennzeichnet, daß die Innenschneiden (52, 62, 72) mit der Bohrerachse (11) Winkel von 25° bis 82°, insbesondere 55° bis 78° bilden.

10. Mehrlippenbohrer nach einem der Ansprüche 1 bis 9, dadurch gekennzeichnet, daß die aus der Außerschneiden und Innenschneiden bestehenden Hauptschneiden (51, 52 ; 61, 62 ; 71, 72) dreieckförmig, trapezförmig oder gerundet ausgebildet sind.

### Claims

1. Multi-lip drill having at least three cutting lips (5, 6, 7) and substantially radially extending leading cutting edges, each of which is divided by an axially protruding culmination point (53, 63, 73) into an outer cutting edge (51, 61, 71), which is positively inclined relative to the drill axis (11), and an inner cutting edge (52, 62, 72) which is negatively inclined relative to the drill axis (11), at least one of the inner cutting edges extending as far as, or beyond, the drill axis (11), whereby the outer cutting edges (51, 61, 71), which extend from the culmination points (53, 63, 73), lie on a common surface of revolution, at least up to a relatively large distance from their culmination points, characterised in that :

a) the culmination points (53, 63, 73) have different radial spacings from the drill axis (11) and protrude axially over different distances ; and

b) the inner cutting edges (52, 62, 72) are inclined at different angles relative to the drill axis (11) ; and

c) their surfaces of revolution penetrate one another in their central regions.

2. Multi-lip drill according to claim 1, characterised in that the circles of revolution of the culmination points (53, 63, 73) of the leading cutting edges lie radially and closely adjacent one another.

3. Multi-lip drill according to claim 1 or 2,

characterised in that the inner cutting edge (52), which extends from the inner culmination point (53), is more gently inclined relative to the drill axis (11) than the other inner cutting edge or edges (62), and the inner cutting edge (72), which extends from the outer culmination point (73), is more sharply inclined relative to the drill axis (11) than the other inner cutting edge or edges (62).

4. Multi-lip drill according to claim 1, characterised in that the external cutting edge corners (9) between outer cutting edges (51, 61, 71) and secondary cutting edges (8) lie in the same radial plane relative to the drill axis (11).

5. Multi-lip drill according to one of claims 1 to 4, characterised in that at least one external cutting edge corner between outer cutting edges (51, 61, 71) and secondary cutting edges (8) is bevelled or rounded.

6. Multi-lip drill according to one of claims 1 to 5 with more than three drilling lips, characterised in that at least two leading cutting edges, which are disposed substantially opposite one another, are provided with culmination points (83, 531) which protrude by substantially the same distance over the other portion of the leading cutting edges.

7. Multi-lip drill according to one of claims 1 to 6, characterised in that the culmination points (53, 63, 73) have a spacing of between 0.15r and 0.8r, more especially between 0.2r and 0.3r, from the drill axis (11).

8. Multi-lip drill according to one of claims 1 to 7, characterised in that the outer cutting edges (51, 61, 71) form with the drill axis (11) angles of between 45° and 85°, more especially between 58° and 65°.

9. Multi-lip drill according to one of claims 1 to 8, characterised in that the inner cutting edges (52, 62, 72) form with the drill axis (11) angles of between 25° and 82°, more especially between 55° and 78°.

10. Multi-lip drill according to one of claims 1 to 9, characterised in that the principal cutting edges (51, 52 ; 61, 62 ; 71, 72), comprising the outer cutting edges and inner cutting edges, are triangular, trapezoidal or rounded in shape.

**Revendications**

1. Outil de perçage ou foret à lèvres multiples comportant au moins trois lèvres de coupe (5, 6, 7) et au moins trois tranchants frontaux qui s'étendent principalement radialement et qui sont chacun divisés par un point de culmination (53, 63, 73), saillant axialement, en un tranchant extérieur (51, 61, 71) incliné positivement par rapport à l'axe (11) de l'outil et un tranchant intérieur (52, 62, 72) incliné négativement par rapport à l'axe (11) de l'outil, dont l'un au moins se prolonge jusqu'à l'axe (11) de l'outil ou au-delà de celui-ci, les tranchants extérieurs (51, 61, 71) partant des points de culmination (53, 63, 73) étant situés sur une surface de révolution commune au moins jusqu'à une plus grande distance par rapport à leurs points de culmination, caractérisé en ce que :

a) les points de culmination (53, 63, 73) sont à des distances radiales différentes par rapport à l'axe (11) de l'outil et font saillie axialement sur des hauteurs différentes et,

b) les tranchants intérieurs (52, 62, 72) sont inclinés sur l'axe (11) de l'outil sous des angles différents et,

c) leurs surfaces de révolution s'interpénètrent dans leur zone centrale.

2. Outil de perçage ou foret à lèvres multiples selon la revendication 1, caractérisé en ce que les cercles de révolution des points de culmination (53, 63, 73) des tranchants frontaux sont situés très près les uns des autres radialement.

3. Outil de perçage ou foret à lèvres multiples selon la revendication 1 ou 2, caractérisé en ce que le tranchant intérieur (52) s'étendant à partir du point de culmination intérieur (53) présente une inclinaison plus faible, tandis que le tranchant intérieur (72) s'étendant à partir du point de culmination extérieur (73) présente une inclinaison plus forte par rapport à l'axe (11) de l'outil que l'autre ou les autres tranchants intérieurs (62).

4. Outil de perçage ou foret à lèvres multiples selon la revendication 1, caractérisé en ce que les coins extérieurs (9) des tranchants, formés entre les tranchants extérieurs (51, 61, 71) et les tranchants voisins (8), se situent dans le même plan radial par rapport à l'axe (11) de l'outil.

5. Outil de perçage ou foret à lèvres multiples selon l'une quelconque des revendications 1 à 4, caractérisé en ce qu'au moins l'un des coins extérieurs des tranchants, formés entre les tranchants extérieurs (51, 61, 71) et les tranchants voisins (8), est chanfreiné ou arrondi.

6. Outil de perçage ou foret à lèvres multiples selon l'une quelconque des revendications 1 à 5, comportant plus de trois lèvres de coupe, caractérisé en ce qu'au moins deux tranchants frontaux disposés sensiblement l'un en face de l'autre sont pourvus de points de culmination (83, 531) saillant sur sensiblement la même hauteur au-delà de l'autre partie des tranchants frontaux.

7. Outil de perçage ou foret à lèvres multiples selon l'une quelconque des revendications 1 à 6, caractérisé en ce que les points de culmination (53, 63, 73) sont à une distance de 0,15r à 0,8r, en particulier 0,2-0,3r, par rapport à l'axe (11) de l'outil.

8. Outil de perçage ou foret à lèvres multiples selon l'une quelconque des revendications 1 à 7, caractérisé en ce que les tranchants extérieurs (51, 61, 71) forment avec l'axe (11) de l'outil un angle de 45° à 85°, en particulier 58° à 65°.

9. Outil de perçage ou foret à lèvres multiples selon l'une quelconque des revendications 1 à 8, caractérisé en ce que les tranchants intérieurs (52, 62, 72) forment avec l'axe (11) de l'outil un angle de 25° à 82°, en particulier 55° à 78°.

10. Outil de perçage ou foret à lèvres multiples selon l'une quelconque des revendications 1 à 9, caractérisé en ce que les tranchants principaux (51, 52 ; 61, 62 ; 71, 72) constitués par les tranchants extérieurs et les tranchants intérieurs, ont une configuration triangulaire, trapézoïdale ou arrondie.

Fig. 1

Fig. 4

Fig. 2

Fig. 5

Fig. 3

Fig. 6

Fig. 7